# EUROPÄISCHE PATENTANMELDUNG

(11) **EP 1 028 046 A2**
(43) Veröffentlichungstag der Anmeldung: **16.08.2000**
(21) Anmeldenummer: 00100563.6
(22) Anmeldetag: 12.01.2000
(51) Int. Cl.: B62D 1/16

(54) **Kombiniertes Schiebestück mit Schwingungsentkopplung**

(30) Priorität: 10.02.1999 DE 19905350
(71) Anmelder: DaimlerChrysler AG, 70567 Stuttgart (DE)
(72) Erfinder: Scheu, Reiner, 72584 Hülben (DE)

(57) **Zusammenfassung**

Die Erfindung betrifft eine Lenkwellengelenkgabel (4) eines Lenkwellenkardangelenks (1) mit einer drehelastischen Kupplung (10) als Entkopplungselement, wobei die drehelastische Kupplung (10) im rohrförmigen Abschnitt (5) der Gelenkgabel (4) angeordnet ist. In der drehelastischen Kupplung (10) ist eine längsbewegliche Kupplung (20) angeordnet. Diese Kupplung (20) umfaßt ein in Längsrichtung innen profiliertes Außenteil (21) und ein mit einem Gegenprofil ausgestattetes Innenteil (31). Das Außenteil (21) weist an seinem dem Kardangelenk (1) zugewandten Ende einen Nockenflansch (23) auf, dessen Nocken (24) in stirnseitige, dem benachbarten Kardangelenk zugewandte Ausnehmungen (8) des rohrförmigen Gelenkgabelabschnitts (5) eingreifen. Hierbei kontaktieren die Nocken (24) im regulären Fahrbetrieb die Ausnehmungen (8) in Umfangs- und Axialrichtung nicht.

Mit der vorliegenden Erfindung wird ein Lenkwellenabschnitt entwickelt, der auf möglichst kurzer Baulänge und unter Minimierung der Bauteileanzahl ein Abwinkeln, Zusammenschieben und Schwingungsentkoppeln einer Lenkwelle ermöglicht.

## Beschreibung

Die Erfindung betrifft eine Lenkwellengelenkgabel eines Lenkwellenkardangelenks mit einer drehelastischen Kupplung als Entkopplungselement, wobei die drehelastische Kupplung im rohrförmigen Abschnitt der Gelenkgabel angeordnet ist.

Eine derartige Gelenkgabel ist aus der DE 196 16 274 A1 bekannt. Dort ist im Nabenbereich der Gelenkgabel ein drehmomentübertragendes Rohr eingesteckt. Das Rohr ist mit Hilfe einer spielbehafteten Bördelverbindung im Nabenbereich gegen ein Längsverschieben gesichert. Der Nabenbereich der Gelenkgabel hat - wie das Rohr - abschnittsweise einen rechteckigen Querschnitt, wobei der Rohrquerschnitt formschlüssig mit Spiel in den Nabenquerschnitt paßt. Im Zwischenraum zwischen den beiden Teilen ist ein Stoß- und Schwingungsabsorber eingebaut, so daß sich das Rohr gegenüber der Gelenkgabel um einen kleinen Verdrehwinkel bewegen kann.

Der vorliegenden Erfindung liegt das Problem zugrunde, einen Lenkwellenabschnitt zu entwickeln, der auf möglichst kurzer Baulänge und unter Minimierung der Bauteileanzahl ein Abwinkeln, Zusammenschieben und Schwingungsentkoppeln einer Lenkwelle ermöglicht. Dieser Lenkwellenabschnitt soll bei sicherer Funktion einfach zu handhaben und wartungsfrei sein.

Das Problem wird mit den Merkmalen des Hauptanspruchs gelöst.
Der mehrfunktionale Lenkwellenabschnitt wird als Teil einer Lenkwellengelenkgabel eines Lenkwellenkardangelenks ausgebildet. Er enthält im rohrförmigen Abschnitt der Gelenkgabel eine drehelastische Kupplung als Entkopplungselement. In der drehelastischen Kupplung ist eine längsbewegliche Kupplung angeordnet. Diese Kupplung umfaßt ein in Längsrichtung innen profiliertes Außenteil und ein mit einem Gegenprofil ausgestattetes Innenteil. Das Außenteil weist an seinem, dem Kardangelenk zugewandten Ende einen Nockenflansch auf, dessen Nocken in stirnseitige, dem benachbarten Kardangelenk zugewandte Ausnehmungen des rohrförmigen Gelenkgabelabschnitts eingreifen. Hierbei kontaktieren die Nocken im regulären Fahrbetrieb die Ausnehmungen in Umfangs- und Axialrichtung nicht.

Der neue Lenkwellenabschnitt bildet ein kompaktes, einfach zu handhabendes Bauteil, das mehrere Funktionen erfüllt und zudem bei geringem Gewicht wenig Bauraum benötigt. Er ist eine Lenkwellengelenkgabel, die als Teil eines Kardangelenkes ein abgewinkeltes Verlegen der Lenkwelle im Fahrzeugaufbau ermöglicht und im Crash-Fall das Ausknicken der Lenkwelle bewirkt.

Außerdem enthält die Lenkwellengelenkgabel einen Längenausgleich, der zum einen ein zyklisches Längenändern aufgrund des oder der verwendeten Kreuzgelenke ausgleicht und zum andern im Crash-Fall ein Verkürzen der Lenkwelle erlaubt. Gegebenenfalls wird der Längenausgleich auch für die Verstellung der Lenkradposition verwendet.

Zwischen den Teilen des Längenausgleichs und der Lenkwellengelenkgabel sitzt ein Schwingungsentkopplungselement, das Lenkungsstöße und Fahrbahnrauigkeiten vom Lenkrad und der fahrgastzellenseitgen Lenkwellenlagerung fern hält.

Weitere Einzelheiten der Erfindung ergeben sich aus den nicht zitierten Unteransprüchen und der nachfolgenden Beschreibung einer schematisch dargestellten Ausführungsform:
- Figur 1:: Zusammenbauzeichnung einer Gelenkgabel mit einer elastischen Kupplung und einer längsverschieblichen Kupplung.
- Figur 2:: Explosionsdarstellung zu Figur 1 mit Kardangelenk.

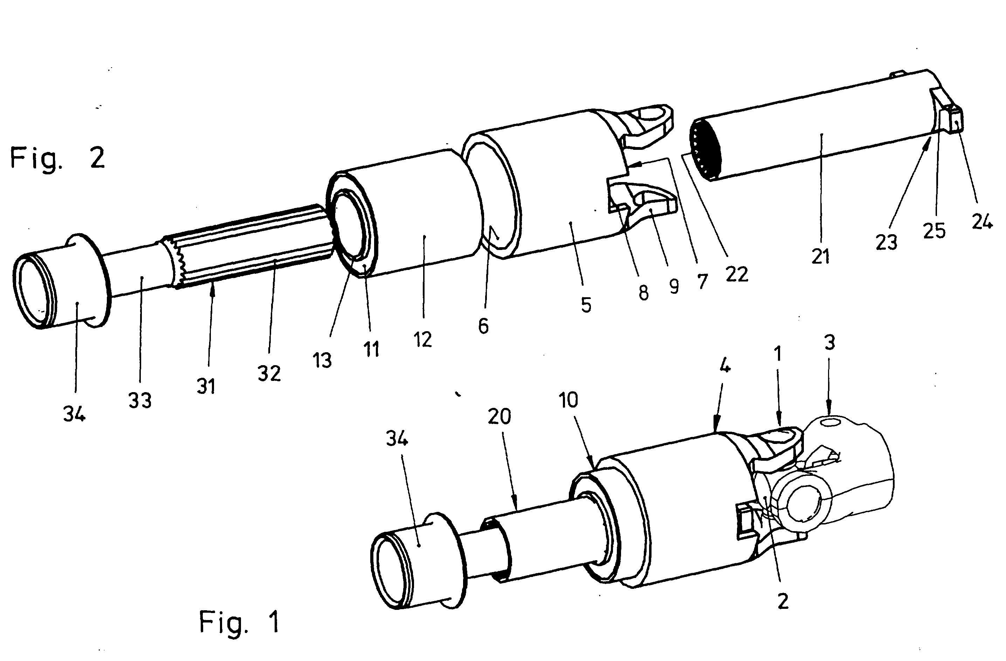

Die Figuren 1 und 2 zeigen drehmomentübertragende Teile einer Lenksäule, die zwischen dem Lenkrad und dem Lenkgetriebe angeordnet sind. Lenkrad und Lenkgetriebe sind in diesen Figuren nicht dargestellt. Die gezeigten Teile bilden ein sogenanntes kombiniertes Schiebestück (20) mit Schwingungsentkopplung (10) als Bestandteile einer Kardangelenkgabel (4) einer Lenkwelle.

Das Kardangelenk (1) nach Figur 1 umfaßt beispielsweise zwei gegabelte Naben (3, 4), die über ein Kardankreuz (2) gelenkig miteinander verbunden sind. Die paarweise einander gegenüberliegenden Kreuzzapfen des Kardankreuzes (2) greifen in die Bohrungen jeweils einer gegabelten Nabe bzw. Gelenkgabel (3, 4). Dabei ist beispielsweise die Gelenkgabel (3) mit einem Lenkrad verbunden, während die Gelenkgabel (4) mit den zum Lenkgetriebe führenden Wellenteilen, z.B. dem Bauteil (31) gekoppelt ist.

Die Gelenkgabel (4) ist eine Hülse mit zwei an einem Hülsenende einander gegenüber angeordneten Laschen (9). Letztere bilden die Gabelteile, in denen die Kreuzzapfen gelagert sind. Die Hülse wird als rohrförmiger Gelenkgabelabschnitt (5) bezeichnet. Dieser Abschnitt (5) hat eine zentrale Bohrung (6), in die eine drehelastische Kupplung (10) eingepreßt ist.

Die drehelastische Kupplung (10) ist ein zylindrisches Bauteil, das beispielsweise aus drei zumindest annähernd rohrförmigen Einzelteilen besteht. Das mittlere Einzelteil ist ein rohrförmiger Elastomerkörper (11) aus Gummi, der zwischen einer Außenbuchse (12) und einer Innenbuchse (13) einvulkanisiert ist. Die Buchsen (12, 13) haben hier die gleiche Länge und sind aus Metall. Der Elastomerkörper (11) ist kürzer als die Buchsen (12, 13). Letzterer kann auch ein in die Buchsen (12, 13) eingeklebtes Kunststoffelement sein.

Die drehelastische Kupplung (10) sitzt z.B. mittels eines Querpreßsitzes im rohrförmigen Gelenkgabelabschnitt (5). Letzterer hat an seiner dem Kardankreuz (1) zugewandten Stirnseite (7) zwei einander gegenüberliegende Ausnehmungen (8), die im Bereich zwischen den Gabellaschen (9) liegen. Die Ausnehmungen (8) haben eine annähernd rechteckige Kontur. Die in den Gabelabschnitt (5) eingepreßte Kupplung (10) endet bündig mit dem Grund dieser Ausnehmungen (8).

Die längsbewegliche Kupplung (20) besteht aus einem mit einem Nockenflansch (23) versehenen Außenteil (21) und einem mit einem Bördelflansch (34) ausgestatteten Innenteil (31). Am Bördelflansch (34) wird z.B. ein zum Lenkgetriebe führendes - nicht dargestelltes - Wellrohr befestigt.

Das Außen- (21) und das Innenteil (31) sind jeweils zumindest bereichsweise mit korrespondierenden Verzahnungen (22, 32) ausgestattet. Als Verzahnungen werden beispielsweise ein Keilwellen- oder Kerbverzahnungsprofil verwendet.

Das Außenteil (21) hat außen eine glatte, zylindrische Oberfläche, die am rechten Ende nach Figur 1 in dem Nockenflansch (23) endet. Im montierten Zustand sitzt es über einen Querpreßsitz in der Innenbuchse (13) der drehelastischen Kupplung (10). Die Nocken (24) des Nockenflansches (23) ragen in die Ausnehmungen (8) der Gelenkgabel (4) hinein. Bei unbelasteter Lenkwelle haben sie zum Grund und den Seitenflächen der Ausnehmungen (8) einen zumindest annähernd gleichen Abstand. Das in Umfangs- und Längsrichtung vorhandene Spiel zwischen der Gelenkgabel (4) und dem Nockenflansch (23) kann 1 bis 3 mm betragen.

Die Nocken (24) des Nockenflansches (23) sind im Ausführungsbeispiel zwei Kragarme die von der zylindrischen Außenkontur des Außenteils (21) abstehen. Sie haben zumindest im Bereich der Ausnehmungen (8), normal bzw. senkrecht zur Ausnehmungsfläche betrachtet, einen rechteckigen Querschnitt, der sich außerhalb des Ausnehmungsbereiches und innerhalb des Nabenbereichs in Richtung auf die Außenteilmittellinie verbreitert. Gegebenenfalls sind die in Umfangsrichtung orientierten Seitenflächen (25) der Nocken (24) zylindrisch oder ballig ausgeführt. Folglich berühren sich dann die Gelenkgabel (4) und die Nocken (24) bei einer maximalen und idealen Torsion der Lenkwelle definiert an zwei Linien oder zwei Punkten.

Die Nockenseitenflächen (25) oder die ihnen gegenüberliegenden Seitenflächen der Ausnehmungen (8) können zur Dämpfung mit elastischem Material beschichtet sein.

Das Innenteil (31) der längenausgleichenden Kupplung (20) sitzt - nach der Montage - über die drehmomentübertragende Verzahnung (22, 32) im Außenteil (21). Der maximale Längshub der Kupplung (20) liegt im cm-Bereich. Die Außenverzahnung (32) des Innenteils (31) kann u.a. zur Verbesserung des Trockengleitverhaltens in Längsrichtung beispielsweise mit einem Kunststoffgleitbelag ausgestattet sein. An die Außenverzahnung (32) schließt sich nach einen kurzen unverzahnten Zwischenabschnitt (33) der Bördelflansch (34) an. Letzterer hat einen Bördeldurchmesser, der größer ist als der Außendurchmesser des Außenteils (21). Gegebenenfalls ist der Bördelflansch (34) hülsenförmig ausgebildet. Dabei kann er soweit zurückgewölbt sein, daß er in Richtung auf das Kardangelenk (1) das Außenteil (21) bereichsweise berührungsfrei überragt. Hierbei benötigt das Innenteil (31) nahezu nur die Länge der Außenverzahnung (32). Das Wellrohr überragt dann - einen Teil der Baulänge einsparend - teilweise das Außenteil (21) der Kupplung (20).

Das kombinierte Schiebestück kann wie eine übliche Lenkwellengelenkgabel gehandhabt und gelagert werden. In der Regel bildet es zusammen mit den das Kardangelenk (1) komplettierenden Teilen eine Baugruppe. Diese Baugruppe hat eine Baulänge, die nur unwesentlich größer ist, als die eines handelsüblichen Kardangelenkes, obwohl sie einen relativ großen Längenausgleich und eine Schwingungsentkopplung enthält.

## Patentansprüche

1. Lenkwellengelenkgabel eines Lenkwellenkardangelenks mit einer drehelastischen Kupplung als Entkopplungselement, wobei die drehelastische Kupplung im rohrförmigen Abschnitt der Gelenkgabel angeordnet ist,
dadurch gekennzeichnet,
- daß in der drehelastischen Kupplung (10) eine längsbewegliche Kupplung (20) angeordnet ist,
- daß die Kupplung (20) ein in Längsrichtung innen profiliertes Außenteil (21) und ein mit einem Gegenprofil ausgestattetes Innenteil (31) umfaßt,
- daß das Außenteil (21) an seinem, dem Kardangelenk (1) zugewandten Ende, einen Nockenflansch (23) aufweist, dessen Nocken (24) in stirnseitige, dem Kardangelenk (1) zugewandte, Ausnehmungen (8) des rohrförmigen Abschnitts (5) eingreifen,
- daß die Nocken (24) im regulären Fahrbetrieb die Ausnehmungen (8) in Umfangs- und Axialrichtung nicht kontaktieren.

2. Lenkwellengelenkgabel gemäß Anspruch 1, dadurch gekennzeichnet, daß das Profil des Außen- (21) und Innenteils (31) eine Verzahnung (22, 32) ist.

3. Lenkwellengelenkgabel gemäß Anspruch 2, dadurch gekennzeichnet, daß zumindest die Verzahnung (32) des Innenteils (31) kunststoffbeschichtet ist.

4. Lenkwellengelenkgabel gemäß Anspruch 1, dadurch gekennzeichnet, daß der Nockenflansch (23) nicht über die dem Kardangelenk (1) zugewandte Stirnseite (7) des rohrförmigen Gelenkgabelabschnitts (5) übersteht.

5. Lenkwellengelenkgabel gemäß Anspruch 1, dadurch gekennzeichnet, daß die drehelastische Kupplung (10) ein handelsübliches Elastomerlager ist, das aus einem zwischen einer Außen-(12) und Innenbuchse (13) angeordneten rohrförmigen Elastomerkörper (11) besteht.

6. Lenkwellengelenkgabel gemäß Anspruch 1, dadurch gekennzeichnet, daß die Länge der drehelastischen Kupplung (10) der Länge des rohrförmigen Gabelabschnitts (5) entspricht oder geringfügig größer ist.
